# EUROPÄISCHE PATENTANMELDUNG

(11) **EP 4 666 821 A1**
(43) Veröffentlichungstag der Anmeldung: **24.12.2025**
(21) Anmeldenummer: 25182754.9
(22) Anmeldetag: 13.06.2025
(51) Int. Cl.: A01B 29/06, A01B 29/04, A01B 49/02

(54) **VORRICHTUNG ZUR VERMEIDUNG VON ANHAFTUNGEN AN EINER STABWALZE UND EINE BODENBEARBEITUNGSMASCHINE**

(30) Priorität: 19.06.2024 DE 102024117198
(71) Anmelder: Rohn, Peter, 91610 Insingen (DE); Rohn, Julian, 91610 Insingen (DE)
(72) Erfinder: Rohn, Peter, 91610 Insingen (DE); Rohn, Julian, 91610 Insingen (DE)
(74) Vertreter: DREISS Patentanwälte PartG mbB

(57) **Zusammenfassung**

Die Erfindung betrifft eine Vorrichtung (10) zur Vermeidung von Anhaftungen an einer Stabwalze (12) und eine Bodenbearbeitungsmaschine mit einer derartigen Vorrichtung (10).

## Beschreibung

Die Erfindung betrifft eine Vorrichtung zur Vermeidung von Anhaftungen an einer Stabwalze mit Merkmalen des Anspruchs 1 und eine Bodenbearbeitungsmaschine mit Merkmalen des nebengeordneten Anspruchs.

In der Landwirtschaft werden Stabwalzen zur Bodenbearbeitung eingesetzt. Die Stabwalze weist, wie der Name schon sagt, stabförmige Elemente bzw. Stäbe auf, die über den Boden abgerollt werden. Wenn der Boden bspw. nass und/oder lehmig ist, können sich mit der Zeit Anhaftungen an der Stabwalze bzw. an den einzelnen stabförmigen Elementen absetzten. Die Stabwalze setzt zu und das Ergebnis der Bodenbearbeitung wird negativ beeinflusst. Die Bodenbearbeitung muss ggfs. dann vorzeitig beendet werden. Zudem ist eine anschließende Reinigung der mit Anhaftungen verschmutzen Stabwalze sehr aufwendig, zeit- und kostenintensiv.

Es ist daher Aufgabe der vorliegenden Erfindung eine Vorrichtung zur Vermeidung von Anhaftungen an einer Staubwalze und eine Bodenbearbeitungsmaschine bereitzustellen, wobei die obigen Nachteile ausgeräumt oder zumindest reduziert werden.

Die obige Aufgabe wird durch eine Vorrichtung zur Vermeidung von Anhaftungen an einer Stabwalze mit den Merkmalen des Anspruchs 1 gelöst.

Die Vorrichtung umfasst mindestens eine Abstreiferleiste, insbesondere mehrere nebeneinander angeordnete Abstreiferleisten, zum Abstreifen von Anhaftungen an der Stabwalze. Die Vorrichtung umfasst zudem eine Befestigungseinrichtung. Die Befestigungseinrichtung ist eingerichtet, um die Vorrichtung derart an der Stabwalze zu befestigen, dass diese außerhalb der Stabwalze und beabstandet zur Stabwalze angeordnet ist. Der Abstand zwischen der Stabwalze und der Abstreiferleiste kann bspw. in einem Bereich von 1 bis 2 cm liegen und insbesondere variabel einstellbar sein.

Bei den Anhaftungen kann es sich um bspw. Erde, Lehm und/oder Biomasse handeln.

Hierdurch können Anhaftungen an der Stabwalze mit einfachen Mitteln vermieden oder zumindest reduziert werden. Mittels der Vorrichtung, insbesondere der Abstreiferleiste, können Anhaftungen sofort abgestreift bzw. entfernt werden, bevor diese größer werden und die Stabwalze zusetzt. Die mit den Anhaftungen einhergehenden Nachteile können vermieden werden. Insbesondere ist eine Bodenbearbeitung auch bei feuchten Bedingungen möglich. Eine zeitaufwendige Reinigung der Stabwalze kann entfallen.

Gemäß einer Weiterbildung der Vorrichtung kann die Vorrichtung eine Tragschiene umfassen. Die Abstreiferleiste kann an der Tragschiene befestigt sein. Die Tragschiene und/oder die Abstreiferleiste können jeweils eine Länge aufweisen, die mindestens so lang ist, insbesondere länger, wie die Länge der Stabwalze. Die Tragschiene und/oder die Abstreiferleiste erstrecken sich jeweils insbesondere über die gesamte Länge der Stabwalze. Es können mehrere, insbesondere sechs, Abstreiferleisten (insbesondere bei 3 m Arbeitsbreite) nebeneinander entlang der Tragschiene angeordnet sein.

Hierdurch kann ein Befestigen der Abstreiferleiste mit einfachen Mitteln umgesetzt werden. Insbesondere können Anhaftungen über die gesamte Länge der Stabwalze verhindert werden.

Gemäß einer Weiterbildung der Vorrichtung können die Tragschiene und/oder die Abstreiferleiste derart eingerichtet sein, dass die Abstreiferleiste in mindestens zwei unterschiedlichen Positionen an der Tragschiene befestigt werden kann. Dabei ist in den unterschiedlichen Positionen jeweils ein Abstand zwischen der Abstreiferleiste und der Stabwalze unterschiedlich. Mit anderen Worten, der Abstand zwischen der Abstreiferleiste und der Stabwalze kann variiert bzw. eingestellt werden. Dies kann mittels einer ersten Schraubverbindung umgesetzt werden. Hierzu können bspw. Langlöcher an der Tragschiene und/oder der Abstreiferleiste angeordnet sein, in die jeweils eine Schraube eingreift und in unterschiedlichen Positionen entlang des Langlochs festschraubbar ist.

Hierdurch kann mit einfachen Mitteln der Abstand zwischen der Abstreiferleiste und der Stabwalze eingestellt werden. Hierdurch kann der Abstreifvorgang gezielt auf bspw. unterschiedliche Arten von Anhaftungen bzw. auf unterschiedliche Böden eingestellt werden.

Gemäß einer Weiterbildung der Vorrichtung kann die Befestigungseinrichtung mindestens eine Aufnahme zum Befestigen und/oder Aufnehmen eines Endes der Tragschiene umfassen.

Hierdurch kann die Tragschiene bzw. deren Ende mit einfachen Mitteln befestigt bzw. aufgenommen werden.

Gemäß einer Weiterbildung der Vorrichtung kann die Aufnahme länglich ausgebildet und derart eingerichtet sein, dass das Ende der Tragschiene innerhalb der Aufnahme in mindestens zwei unterschiedlichen Positionen befestigt werden kann. Dabei ist in den unterschiedlichen Positionen jeweils ein Abstand zwischen der Abstreiferleiste und der Stabwalze unterschiedlich.

Hierdurch kann mit einfachen Mitteln der Abstand zwischen der Abstreiferleiste und der Stabwalze eingestellt werden. Hierdurch kann der Abstreifvorgang gezielt auf bspw. unterschiedliche Arten von Anhaftungen bzw. auf unterschiedliche Böden eingestellt werden.

Gemäß einer Weiterbildung der Vorrichtung kann die Tragschiene einen rechteckigen Querschnitt aufweisen. Die Aufnahme kann zwei mindestens teilweise planparallele Aufnahmeflächen aufweisen. Die Aufnahme und/oder die Tragschiene können derart eingerichtet sein, dass das Ende der Tragschiene formschlüssig zwischen den Aufnahmeflächen aufgenommen wird oder werden kann. Das Ende der Tragschiene kann mittels mindestens eines Fixierelements in den unterschiedlichen Positionen fixiert werden. Das Fixierelement kann insbesondere als eine Schraube, Scherschraube oder Bolzen ausgebildet sein. Die Tragschiene kann als ein, insbesondere rechteckiges oder quadratisches, Hohlprofil ausgebildet sein.

Das Fixierelement kann oberhalb und/oder unterhalb der Tragschiene angebracht sein. Das Fixierelement kann derart ausgelegt sein (bspw. als Scherschraube), dass es bricht, wenn eine entsprechend große Kraft auf die Abstreiferleiste und/oder die Tragleiste bspw. mittels eines eingeklemmten Steins ausgeübt wird. In diesem Fall bricht das Fixierelement, so dass die Tragschiene und/oder die Abstreiferleiste nicht mehr innerhalb der Aufnahme fixiert ist und entlang der Aufnahme verschoben werden kann.

Durch ein Einstellen eines entsprechend großen Abstandes zwischen der Abstreiferleiste und der Stabwalze kann die Abstreiferleiste quasi "abgeschaltet", also außer Betrieb gesetzt, werden. Durch ein Einstellen eines entsprechend kleinen Abstandes zwischen der Abstreiferleiste und der Stabwalze kann die Abstreiferleiste sozusagen "eingeschaltet", also in Betrieb gesetzt, werden.

Hierdurch kann die Einstellbarkeit des Abstandes zwischen der Abstreiferleiste und der Stabwalze mit einfachen Mitteln umgesetzt werden. Zudem kann bspw. bei einem eingeklemmten Stein gewährleistet werden, dass die Abstreiferleiste und/oder die Vorrichtung nicht beschädigt wird.

Gemäß einer Weiterbildung der Vorrichtung kann die Befestigungseinrichtung mindestens ein Befestigungselement mit einem ersten Ende und einem zweiten Ende aufweisen. Das Befestigungselement kann mit seinem ersten Ende an der Stabwalze befestigt oder befestigbar sein. Dies kann mittels einer zweiten Schraubverbindung umgesetzt werden. Das Befestigungselement kann mit seinem zweiten Ende an der Aufnahme befestigbar oder befestigt sein. Dies kann mittels einer dritten Schraubverbindung umgesetzt werden.

Hierdurch kann die Befestigung der Vorrichtung an einer Stabwalze mit einfachen Mitteln umgesetzt werden.

Gemäß einer Weiterbildung der Vorrichtung kann das Befestigungselement an seinem ersten Ende eine Aussparung aufweisen. Die Aussparung kann größer sein, als ein Durchmesser einer Welle der Stabwalze.

Hierdurch kann die Vorrichtung mit einfachen Mitteln auf eine Stabwalze montiert werden. Insbesondere ist ein Demontieren der Welle der Stabwalze nicht notwendig, um die Vorrichtung zu Montieren. So kann eine Standard-Stabwalze mit der Vorrichtung einfach und schnell aufgerüstet bzw. nachgerüstet werden.

Gemäß einer Weiterbildung der Vorrichtung können das Befestigungselement und/oder die Aufnahme derart eingerichtet sein, dass die Aufnahme in mindestens zwei unterschiedlichen Positionen an dem zweiten Ende des Befestigungselements fixiert bzw. befestigt werden kann. Dabei ist in den unterschiedlichen Positionen jeweils ein Abstand und/oder ein Winkel zwischen der Abstreiferleiste und der Stabwalze (oder ein Winkel zwischen der Abstreiferleiste und dem Befestigungselement) unterschiedlich.

Hierdurch kann mit einfachen Mitteln ein Abstand und/oder ein Winkel zwischen der Abstreiferleiste und der Stabwalze (oder dem Befestigungselement) bspw. auf unterschiedliche Arten von Anhaftungen bzw. auf unterschiedliche Böden wunschgemäß eingestellt werden.

Gemäß einer Weiterbildung der Vorrichtung kann die Abstreiferleiste zumindest teilweise, insbesondere vollständig, aus Gummi, insbesondere Hartgummi, ausgebildet sein. Ebenso denkbar ist es, dass die Abstreiferleiste zumindest teilweise, insbesondere vollständig, aus Metall oder PVC ausgebildet sein kann. Die Abstreiferleiste kann aus mehreren Einzelteilen bestehen.

Hierdurch kann die Abstreiferleiste mit einfachen Mitteln und kostengünstig umgesetzt werden. Mögliche Beschädigungen der Abstreiferleiste und/oder der Stabwalze, die bspw. durch einen mitgerissenen oder zwischen den einzelnen Teilen der Vorrichtung eingeklemmten Stein verursacht werden können, können insbesondere aufgrund der Elastizität der aus Gummi ausgebildeten Abstreiferleiste vermieden oder zumindest reduziert werden.

Gemäß einer Weiterbildung der Vorrichtung können die Tragschiene und/oder die Befestigungseinrichtung aus Metall, insbesondere Stahl (Edelstahl), ausgebildet sein.

Hierdurch kann die Vorrichtung besonders robust umgesetzt werden.

Die obige Aufgabe wird durch eine Bodenbearbeitungsmaschine mit den Merkmalen des nebengeordneten Anspruchs gelöst. Die Bodenbearbeitungsmaschine umfasst eine Stabwalze mit einer Vorrichtung gemäß obiger Ausführungen. Die Stabwalze kann mehrere stabförmige Elemente (Walzenstäbe) aufweisen. Die Stabwalze kann auch als eine Krümlerwalze ausgebildet sein. Grundsätzlich eignen sich diese Arten von Walzen besonders gut, um Feinerde zu erzeugen, da die Walzenstäbe, wenn sie in den Boden eindringen, viel Erde mitnehmen und nach oben werfen.

Hinsichtlich der mit der Bodenbearbeitungsmaschine erzielbaren Vorteile wird auf die diesbezüglichen Ausführungen zur Vorrichtung verwiesen. Zur weiteren Ausgestaltung der Bodenbearbeitungsmaschine können die im Zusammenhang mit der Vorrichtung beschriebenen und/oder die nachfolgend noch erläuterten Maßnahmen dienen.

Gemäß einer Weiterbildung der Bodenbearbeitungsmaschine kann die Stabwalze mindestens eine Zahnleiste, insbesondere mehrere Zahnleisten, aufweisen. Die Zahnleiste kann an einem der stabförmigen Elemente, bspw. in einem 90° Winkel, angeordnet sein. Es können mehrere Zahnleisten an mehreren stabförmigen Elementen angeordnet sein.

Hierdurch kann die Bodenbearbeitung und/oder Unkrautbekämpfung mittels der Bodenbearbeitungsmaschine weiter optimiert werden.

Gemäß einer Weiterbildung der Bodenbearbeitungsmaschine kann die Zahnleiste mehrere, insbesondere dreieckige Zähne aufweisen. Zwischen jeweils zwei benachbarten Zähnen der Zahnleiste kann ein Schlitz (oder Spalt) angeordnet sein. Die Zahnleiste, die Zähne und/oder die Schlitze können entlang der Umlaufrichtung der Stabwalze ausgerichtet sein. Die einzelnen Zähne können jeweils eine Länge von 3 cm (Zentimeter) und eine Breite von 2 cm aufweisen. Die Schlitze zwischen den Zähnen können eine Länge von 3 mm (Millimeter) und eine Breite von 2 mm aufweisen.

Während der Bodenbearbeitung können Pflanzen oder Pflanzenteile zwischen die einzelnen Zähne der Zahnleiste, insbesondere in die Schlitze, gelangen, sich insbesondere dort verhaken, und durch die Drehung der Stabwalze und die damit verbundene Bewegung der Zahnleisten aus dem Boden herausgerissen werden.

Hierdurch kann die Bodenbearbeitung und/oder Unkrautbekämpfung mittels der Bodenbearbeitungsmaschine weiter optimiert werden.

Gemäß einer Weiterbildung der Bodenbearbeitungsmaschine kann die Bodenbearbeitungsmaschine mindestens einen Grubberzinken aufweisen. Der Grubberzinken kann mit einem einstellbaren Abstand zur Stabwalze, insbesondere in Fahrtrichtung bzw. Bodenbearbeitungsrichtung hinter der Stabwalze, angeordnet sein. So kann die Stabwalze den Grubberzinken insbesondere von sich dort angesammelten längerem Stroh oder sonstigen Pflanzenresten reinigen.

Hierdurch kann die Bodenbearbeitung mittels der Bodenbearbeitungsmaschine weiter optimiert werden.

Gemäß einer Weiterbildung der Bodenbearbeitungsmaschine kann der Grubberzinken an der Tragschiene, an einer weiteren Tragschiene und/oder an der Befestigungseinrichtung befestigt sein.

Hierdurch kann die Befestigung des Grubberzinkens mit einfachen Mitteln umgesetzt werden.

Gemäß einer Weiterbildung der Bodenbearbeitungsmaschine kann die Vorrichtung eine Fixierwelle umfassen. Die Fixierwelle kann an der Vorrichtung und außerhalb der Stabwalze und beabstandet zu der Stabwalze angeordnet sein. Die Fixierwelle kann sich über die gesamte Breite der Stabwalze erstrecken. Die Fixierwelle kann parallel zur Stabwalze und/oder der Tragschiene der Vorrichtung orientiert sein. Auf der Fixierwelle kann mindestens eine Rolle angeordnet sein. Die Rolle kann derart an der Fixierwelle angeordnet sein, dass diese zumindest teilweise zwischen zwei benachbarte Stabförmige Elemente eintauchen kann. Die Rolle kann aus Gummi ausgebildet sein. Die Rolle kann einen Außendurchmesser von 70 mm aufweisen.

Hierdurch können Bodenanhaftungen an der Stabwalze noch effizienter entfernt werden. Dies ist vor Allem bei sehr feuchten Bedingungen vorteilhaft, bspw. wenn kurze Zeit nach einer Gülleausbringung diese in den Boden eingearbeitet werden soll.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Bodenbearbeitungsmaschine mit einer Vorrichtung zur Vermeidung von Anhaftungen an einer Stabwalze gemäß einem ersten Ausführungsbeispiel;
- Fig. 2: einen Ausschnitt einer perspektivischen Ansicht der Bodenbearbeitungsmaschine gemäß Figur 1;
- Fig. 3: einen Ausschnitt einer Draufsicht auf eine Zahnleiste der Stabwalte der Bodenbearbeitungsmaschine gemäß Figur 1:
- Fig. 4: eine Seitenansicht einer Befestigungseinrichtung der Vorrichtung gemäß Figur 1;
- Fig. 5: eine perspektivische Ansicht der Befestigungseinrichtung der Vorrichtung gemäß Figur 1;
- Fig. 6: einen Ausschnitt einer perspektivischen Ansicht der Bodenbearbeitungsmaschine gemäß einem zweiten Ausführungsbeispiel;
- Figur 7: einen Ausschnitt einer perspektivischen Ansicht der Bodenbearbeitungsmaschine gemäß einem dritten Ausführungsbeispiel.

In der nachfolgenden Beschreibung sowie in den Figuren tragen sich entsprechende Bauteile und Elemente gleiche Bezugszeichen. Der besseren Übersichtlichkeit wegen sind nicht in allen Figuren sämtliche Bezugszeichen wiedergegeben.

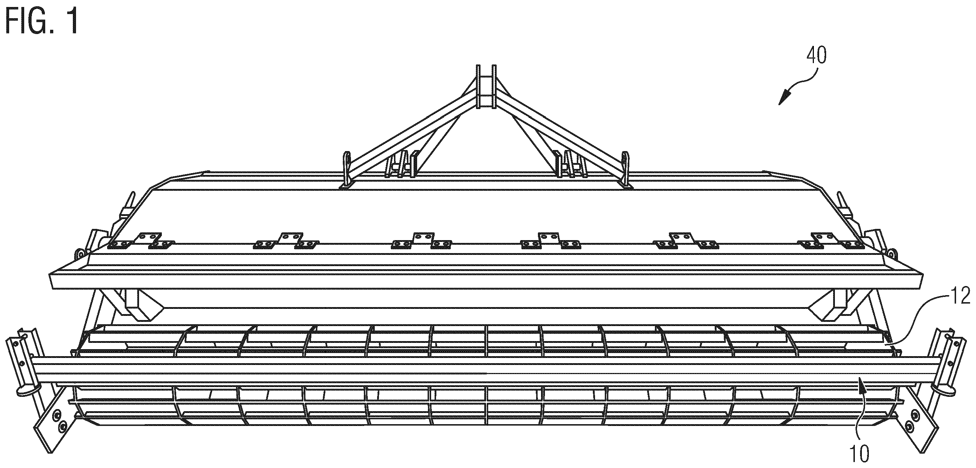

Figur 1 zeigt eine perspektivische Ansicht einer Bodenbearbeitungsmaschine 40 mit einer Vorrichtung 10 zur Vermeidung von Anhaftungen an einer Stabwalze 12 gemäß einem ersten Ausführungsbeispiel.

Die Bodenbearbeitungsmaschine 40 umfasst eine Stabwalze 12 und die Vorrichtung 10, mit der Anhaftungen an der Stabwalze 12 vermieden oder zumindest reduziert werden können.

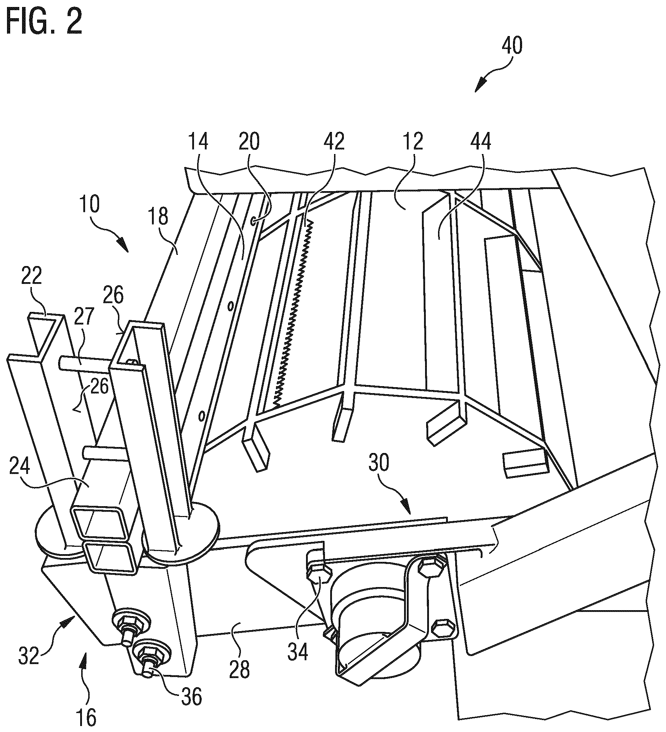

Figur 2 zeigt einen Ausschnitt einer perspektivischen Ansicht der Bodenbearbeitungsmaschine 40 gemäß Figur 1.

Die Vorrichtung 10 umfasst mindestens eine Abstreiferleiste 14, insbesondere mehrere nebeneinander angeordnete Abstreiferleisten 14, zum Abstreifen von Anhaftungen an der Stabwalze 12. Die Vorrichtung 10 umfasst eine Befestigungseinrichtung 16 zur Befestigung der Vorrichtung 10 derart an der Stabwalze 12, dass diese außerhalb der Stabwalze 12 und beabstandet zur Stabwalze 12 angeordnet ist.

Die Vorrichtung 10 kann eine Tragschiene 18 umfassen. Die Tragschiene 18 ist vorliegend in Form zweier quadratischer Hohlprofile ausgebildet, die miteinander verbunden, insbesondere verschweißt, sein können. Selbstverständlich sind auch andere Formen der Tragschiene 18 denkbar. Die Abstreiferleiste 14 kann an der Tragschiene 18 befestigt sein. Bei mehreren Abstreiferleisten 14 können diese nebeneinander entlang der Tragschiene 18 angeordnet und mit der Tragschiene befestigt sein.

Die Tragschiene 18 und/oder die Abstreiferleiste 14 können derart eingerichtet sein, dass die Abstreiferleiste 14 in mindestens zwei unterschiedlichen Positionen an der Tragschiene 18 befestigt werden kann. Dabei ist in den unterschiedlichen Positionen jeweils ein Abstand zwischen der Abstreiferleiste 14 und der Stabwalze 12 unterschiedlich. Hierdurch kann ein wunschgemäßer Abstand zwischen der Abstreiferleiste 14 und der Stabwalze 12 eingestellt werden. Dies kann mittels einer ersten Schraubverbindung 20 umgesetzt werden. Hierzu sind vorliegend an der Abstreiferleiste 14 mehrere Langlöcher vorgesehen, durch die sich jeweils eine Schraube erstreckt. Durch ein Verschieben der jeweiligen Schrauben entlang der jeweiligen Langlöchern und Festschrauben kann der Abstand zwischen der Abstreiferleiste 14 und der Stabwalze 12 variiert bzw. eingestellt werden.

Die Stabwalze 12 der Bodenbearbeitungsmaschine 40 umfasst vorliegend mehrere Zahnleisten 42. Die Stabwalze 12 der Bodenbearbeitungsmaschine 40 weist vorliegend mehrere stabförmige Elemente 44 auf. Die Zahnleisten 42 sind jeweils an einem der stabförmigen Elemente 44 angeordnet. Es sind also an mehreren stabförmigen Elementen 44 jeweils eine Zahnleiste 42 angeordnet. Die Zahnleisten 42 können mit den jeweiligen stabförmigen Elementen 44 verschweißt und/oder verschraubt sein.

Die Zahnleisten 42 können in einem Winkel von ca. 90° angeordnet sein, sodass die Zahnleisten 42 nahezu waagerecht in den Boden eindringen können.

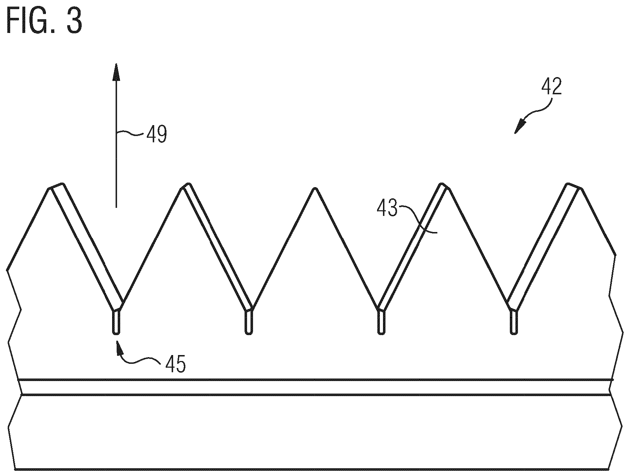

Figur 3 zeigt einen Ausschnitt einer Draufsicht auf eine Zahnleiste 42 der Stabwalze 12 der Bodenbearbeitungsmaschine 40 gemäß Figur 1.

Die Zahnleiste 42 weist vorliegend eine Vielzahl an dreieckigen Zähnen 43 auf. Zwischen jeweils zwei benachbarten Zähnen 43 kann ein Schlitz 45 angeordnet sein. Die dreieckigen Zähne 43 und/oder die Schlitze 45 sind vorliegend entlang einer Umlaufrichtung 49 der Stabwalze 12 ausgerichtet. Die Umlaufrichtung 49 ist in Figur 3 mittels eines Pfeils angedeutet. Die Zähne 43 können eine Länge (entlang der Umlaufrichtung 49) von 3 cm und eine Breite (quer zur Umlaufrichtung 49) von 2 cm aufweisen. Die Schlitze 45 können eine Länge (entlang der Umlaufrichtung 49) von 3 mm und eine Breite (quer zur Umlaufrichtung 49) von 2 mm aufweisen.

Hierdurch können während einer Rollbewegung der Stabwalze 12 bspw. Pflanzen oder Pflanzenteile mittels den Zahnleisten 42 bzw. deren Zähnen 43 aus dem Boden gerissen werden. Die Pflanzen bzw. Pflanzenteile verhaken sich dabei insbesondere in den Schlitzen 45 zwischen jeweils zwei benachbarten dreieckigen Zähnen 43 der Zahnleisten 42 und werden durch die Rollbewegung der Stabwalze 12 mitgerissen und/oder zumindest zum Teil abgeschnitten.

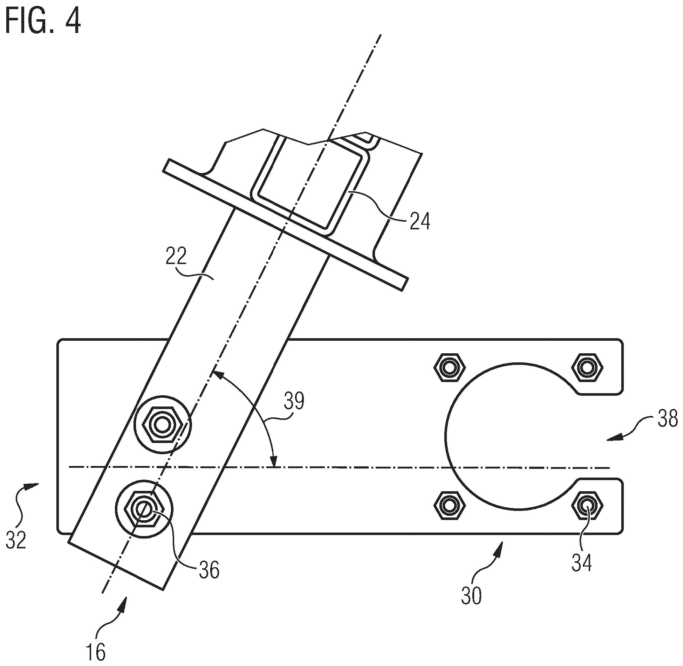

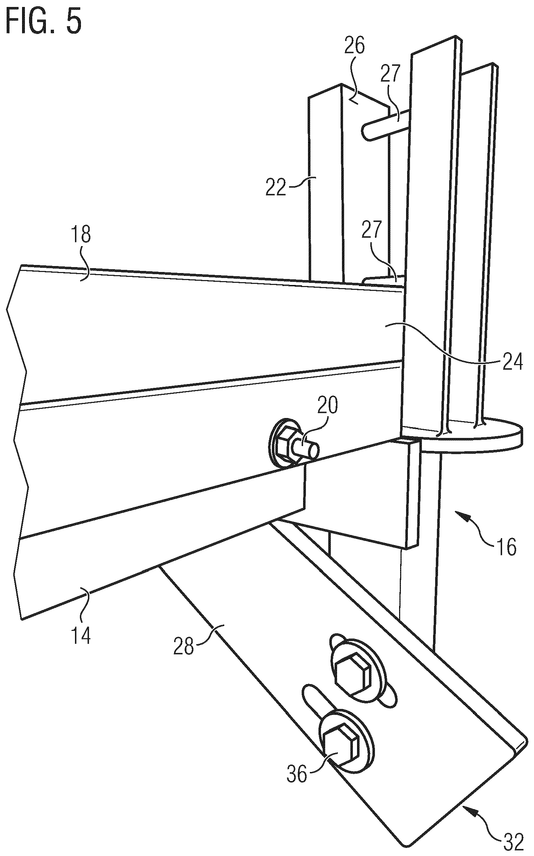

Figur 4 zeigt eine Seitenansicht und Figur 5 eine perspektivische Ansicht der Befestigungseinrichtung 16 der Vorrichtung 10 gemäß Figur 1. Figur 4 zeigt insbesondere eine Ansicht von außen und Figur 5 zeigt insbesondere eine Ansicht von innen.

Die Befestigungseinrichtung 16 kann mindestens eine Aufnahme 22 zum Befestigen eines Endes 24 der Tragschiene 18 umfassen.

Die Aufnahme 22 ist länglich ausgebildet und derart eingerichtet, dass das Ende 24 der Tragschiene 18 innerhalb der Aufnahme 22 in mindestens zwei unterschiedlichen Positionen befestigt werden kann. Dabei ist in den unterschiedlichen Positionen jeweils ein Abstand zwischen der Abstreiferleiste 14 und der Stabwalze 12 unterschiedlich.

Die Tragschiene 18 kann einen rechteckigen Querschnitt und die Aufnahme 22 zwei zumindest teilweise planparallele Aufnahmeflächen 26 aufweisen. Die Aufnahme 22 kann derart eingerichtet sein, dass das Ende 24 der Tragschiene 18 formschlüssig zwischen den Aufnahmeflächen 26 aufgenommen wird oder werden kann. Das Ende 24 der Tragschiene 18 kann mittels mindestens eines Fixierelements 27 in den unterschiedlichen Positionen entlang der Aufnahme 22 fixiert werden. Das Fixierelement 27 kann als eine Schraube, Scherschraube oder Bolzen ausgebildet sein. Vorliegend sind zwei Fixierelemente 27 vorgesehen.

Die Vorrichtung 10 bzw. die Abstreiferleiste 14 kann außer Betrieb (Funktion) gesetzt werden, indem die Tragschiene 18 vorliegend zwischen den beiden Fixierelementen 27 angeordnet wird. Hierdurch wird der Abstand zwischen der Abstreiferleiste 14 und der Stabwalze 12 so groß, dass die Abstreiferleiste 14 keinerlei Einfluss auf die Funktion der Stabwalze 12 ausübt.

Die Abstreiferleiste 14 kann so quasi "abgeschaltet" werden, wobei die Vorrichtung 10 hierzu nicht abmontiert werden muss.

Die Befestigungseinrichtung 16 kann mindestens ein Befestigungselement 28 mit einem ersten Ende 30 und einem zweiten Ende 32 aufweisen. Das Befestigungselement 28 kann mit seinem ersten Ende 30 an der Stabwalze 12 befestigbar oder befestigt sein. Das Befestigungselement 28 kann mit seinem zweiten Ende 32 an der Aufnahme 22 befestigbar oder befestigt sein.

Das Befestigungselement 28 kann mittels einer zweiten Schraubverbindung 34 an der Stabwalze 12 befestigt werden. Die zweite Schraubverbindung 34 weist hierzu vorliegend vier Schrauben auf. Das Befestigungselement kann mittels einer dritten Schraubverbindung 36 mit der Aufnahme 22 verbunden bzw. verschraubt werden. Die dritte Schraubverbindung 36 weist hierzu vorliegend zwei Schrauben auf, die vorliegend jeweils in einem Langloch angeordnet sind, um den Abstand zur Stabwalze 12 einstellen zu können.

Das Befestigungselement 28 kann an seinem ersten Ende 30 eine Aussparung 38 aufweisen. Die Aussparung 38 kann größer sein, als ein Durchmesser einer Welle der Stabwalze 12. So kann das Befestigungselement 28 und damit die Vorrichtung 10 an der Stabwalze 12 befestigt werden, ohne diese auseinander bauen zu müssen. Hierzu kann das Befestigungselement 28 mit der Aussparung 38 über die Welle der Stabwalze 12 (bspw. in Figur 2 von links nach rechts) geschoben und mittels der vier Schrauben der zweiten Schraubverbindung 34 mit der Stabwalze 12 im Bereich eines Lagers der Stabwalze 12 verschraubt werden. Vorliegend werden die vier Schrauben zweiten Schraubverbindung 30 um das Lager der Stabwalze 12 herum verschraubt.

Das Befestigungselement 28 und/oder die Aufnahme 22 können derart eingerichtet sein, dass die Aufnahme 22 in mindestens zwei unterschiedlichen Positionen an dem zweiten Ende 32 des Befestigungselements 28 fixiert werden kann. Dabei ist in den unterschiedlichen Positionen jeweils ein Abstand und/oder ein Winkel zwischen der Abstreiferleiste 14 und der Stabwalze 12 (oder dem Befestigungselement 28) unterschiedlich. Vorliegend weist das Befestigungselement 28 an seinem zweiten Ende 32 zwei übereinander angeordnete Langlöcher, die in Figur 4 von links nach rechts orientiert sind, auf. Mittels zweier Schrauben, die sich durch die Langlöcher erstrecken und entlang der Langlöcher an unterschiedlichen Positionen festschraubbar sind, lässt sich der Winkel 39 einstellen. Hierdurch lässt sich zudem der Abstand zwischen der Abstreiferleiste 14 und der Stabwalze 12 variabel einstellen. So kann der Abstand bspw. auf unterschiedliche Stabwalzen 12 mit einem unterschiedlichen Walzendurchmesser eingestellt werden.

Vorliegend weist die Befestigungseinrichtung 16 zwei Aufnahmen 22 (jeweils eine Aufnahme 22 im Bereich eines Endes der Stabwalze 12) auf, um beide Enden 24 der Tragschiene 18 aufzunehmen. Entsprechend weist die Befestigungseinrichtung 16 vorliegend zwei Befestigungselemente 28 auf (vgl. Figur 1).

Die Abstreiferleiste 14 kann zumindest teilweise aus Metall, Gummi, insbesondere Hartgummi, und/oder PVC ausgebildet sein.

Die Tragschiene 18 und/oder die Befestigungseinrichtung 16 können aus Metall, insbesondere Stahl (Edelstahl), ausgebildet sein.

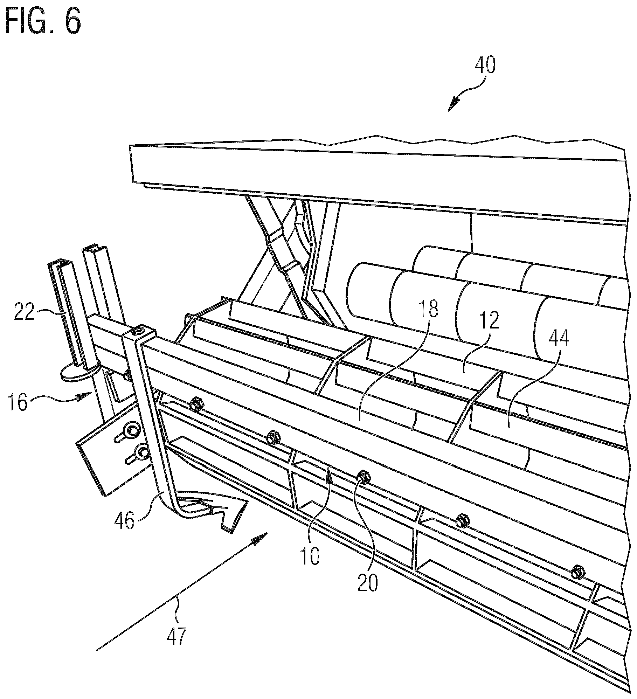

Figur 6 zeigt einen Ausschnitt einer perspektivischen Ansicht der Bodenbearbeitungsmaschine 40 gemäß einem zweiten Ausführungsbeispiel. Das dargestellte zweite Ausführungsbeispiel unterscheidet sich von dem ersten Ausführungsbeispiel durch Folgendes:
Die Bodenbearbeitungsmaschine 40 kann mindestens einen Grubberzinken 46 aufweisen. Der Grubberzinken 46 kann mit einem einstellbaren Abstand zur Stabwalze 12 angeordnet sein.

Der Grubberzinken 46 kann (in Boden-Bearbeitungsrichtung 47), insbesondere unmittelbar, hinter der Stabwalze 12 bzw. einem rotierenden Werkzeug angeordnet sein. So kann der Grubberzinken 46 und das daran angebrachte Schar von aufgesammelten (längeren) Pflanzenresten freigeräumt bzw. freigehalten werden.

Der Grubberzinken 46 kann an der Tragschiene 18, an einer weiteren Tragschiene (nicht dargestellt) und/oder an der Befestigungseinrichtung 16 befestigt sein. Vorliegend ist ein Grubberzinken 46 dargestellt, der an der Tragschiene 18 angeordnet ist.

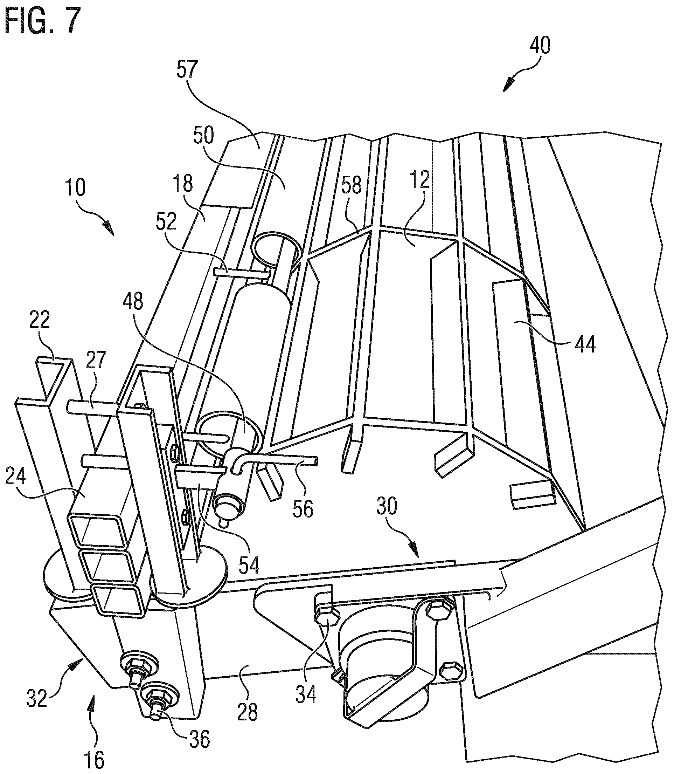

Figur 7 zeigt einen Ausschnitt einer perspektivischen Ansicht der Bodenbearbeitungsmaschine 40 gemäß einem dritten Ausführungsbeispiel. Das dargestellte dritte Ausführungsbeispiel unterscheidet sich von dem ersten Ausführungsbeispiel durch Folgendes:
Die Bodenbearbeitungsmaschine 40 kann eine Fixierwelle 48 umfassen. Die Fixierwelle 48 kann an der Vorrichtung 10 und außerhalb der Stabwalze 12 und beabstandet zu der Stabwalze 12 angeordnet sein. Auf der Fixierwelle 48 kann mindestens eine Rolle 50 derart angeordnet sein, dass die Rolle 50, insbesondere, wenn die Stabwalze 12 in Bewegung ist, zumindest teilweise zwischen zwei benachbarte stabförmige Elemente 44 eintaucht. Die Rolle 50 kann hierzu mit einem Spiel (frei drehbar) auf der Fixierwelle 48 angeordnet sein.

Vorliegend ist die Fixierwelle 48 an der Tragschiene 18 befestigt. Die Fixierwelle 48 kann fest mit der Tragschiene 18 verbunden sein. Auf der Fixierwelle 48 sind vorliegend mehrere Rollen 50 angeordnet. Zwischen jeweils zwei benachbarten Rollen 50 ist vorliegend ein Abstandselement 52 angeordnet. Hierdurch können die Rollen 50 in Bereichen zwischen den stabförmigen Elementen 44 gehalten werden, so dass ein Quetschen der Rollen 50 mittels der Stabwalze 12 verhindert werden kann.

Die Rollen 50 können jeweils eine Wandstärke von 10 mm aufweisen. Die Abstandselemente 52 können waagerecht (in Bezug auf die Schwerkraftrichtung) zur Fixierwelle 48 und/oder zur Tragschiene 18 orientiert sein. Die Abstandselemente 52 können jeweils bis ca. 5 mm vor der Fixierwelle 48 enden, so dass die Fixierwelle 48 trotz Abstandselemente 52 problemlos ausgebaut werden kann. Insbesondere kann ein Abstand zwischen dem jeweiligen Abstandselement 52 und der Fixierwelle 48 kleiner sein, als die Wandstärke der jeweiligen Rollen 50. So kann ein Einklemmen der Rollen 50 am Quersteg 58 (bzw. Segmentscheibe) der Stabwalze 12 verhindert werden.

Es ist denkbar, dass die Bodenbearbeitungsmaschine 40 mindestens ein Abdeckblech 57 aufweisen kann. Das Abdeckblech 57 kann an der Tragschiene 18 angeordnet sein. Das Abdeckblech 57 kann sich abschnittsweise oder über die gesamte Länge der Tragschiene 18 erstrecken. Das Abdeckblech 57 kann den Zwischenraum zwischen Rollen 50 und der Tragschiene 18 zumindest teilweise abdecken. Hierdurch kann verhindert werden, dass bspw. größere Erdklupmen und/oder verwurzelte Grasknollen, die kaum zerbrechen, sich dort festsetzten können. In Figur 7 ist lediglich ein Abdeckblech 57, das sich bereichsweise über die Tragschiene 18 erstreckt, dargestellt.

Die Fixierwelle 48 ist vorliegend mittels einer Fixiereinrichtung 54 mit der Tragschiene 18 der Vorrichtung 10 verschraubt. Die Fixiereinrichtung 54 kann mittels Langlöcher verschraubt sein, sodass ein Verstellen, insbesondere ein Höhenverstellen, der Fixiereinrichtung 54 und damit der Fixierwelle 48 bzw. der Rollen 50 (also ein Verstellen eines Abstandes zwischen der Fixierwelle 48 bzw. der Rollen 50 und der Stabwalze 12) möglich ist. Auch eine andere Verbindung zwischen der Fixiereinrichtung 54 und der Tragschiene 18 (bspw. Schweißverbindung) ist denkbar.

Die Fixiereinrichtung 54 umfasst vorliegend einen Fixierbolzen 56. Die Fixierwelle 48 ist vorliegend mit dem Fixierbolzen 56 an der Fixiereinrichtung 54 arretiert. Durch ein Lösen des Fixierbolzens 56 kann die Fixierwelle 48 von der Fixiereinrichtung 54, der Tragschiene 18 und/oder der Vorrichtung 10 gelöst werden. Damit können auch die Rollen 50 vorliegend entfernt und/oder ausgetauscht (bspw. gegen Rollen 50 mit einer anderen Größe) werden.

Die Bodenbearbeitungsmaschine 40 kann mit oder ohne Zahnleisten 42 ausgebildet sein.

Es ist denkbar, dass die in den Figuren dargestellten Ausführungsbeispiele und/oder deren einzelne Merkmale beliebig miteinander kombiniert werden können.

## Patentansprüche

1. Vorrichtung (10) zur Vermeidung von Anhaftungen an einer Stabwalze (12) umfassend:
- mindestens eine Abstreiferleiste (14), insbesondere mehrere nebeneinander angeordnete Abstreiferleisten (14), zum Abstreifen von Anhaftungen an der Stabwalze (12),
- eine Befestigungseinrichtung (16) zur Befestigung der Vorrichtung (10) derart an der Stabwalze (12), dass diese außerhalb der Stabwalze (12) und beabstandet zur Stabwalze (12) angeordnet ist.

2. Vorrichtung (10) nach Anspruch 1, **dadurch gekennzeichnet, dass** Vorrichtung (10) eine Tragschiene (18) umfasst, wobei die Abstreiferleiste (14) an der Tragschiene (18) befestigt ist.

3. Vorrichtung (10) nach Anspruch 2, **dadurch gekennzeichnet, dass** die Tragschiene (18) und/oder die Abstreiferleiste (14) derart eingerichtet sind, dass die Abstreiferleiste (14) in mindestens zwei unterschiedlichen Positionen, insbesondere mittels mindestens einer ersten Schraubverbindung (20), an der Tragschiene (18) befestigt werden kann, wobei in den unterschiedlichen Positionen jeweils ein Abstand zwischen der Abstreiferleiste (14) und der Stabwalze (12) unterschiedlich ist.

4. Vorrichtung (10) nach Anspruch 2 oder 3, **dadurch gekennzeichnet, dass** die Befestigungseinrichtung (16) mindestens eine Aufnahme (22) zum Befestigen eines Endes (24) der Tragschiene (18) umfasst.

5. Vorrichtung (10) nach Anspruch 4, **dadurch gekennzeichnet, dass** die Aufnahme (22) länglich ausgebildet und derart eingerichtet ist, dass das Ende (24) der Tragschiene (18) innerhalb der Aufnahme (22) in mindestens zwei unterschiedlichen Positionen befestigt werden kann, wobei in den unterschiedlichen Positionen jeweils ein Abstand zwischen der Abstreiferleiste (14) und der Stabwalze (12) unterschiedlich ist.

6. Vorrichtung (10) nach Anspruch 4 oder 5, **dadurch gekennzeichnet, dass** die Tragschiene (18) einen rechteckigen Querschnitt aufweist, wobei die Aufnahme (22) zwei zumindest teilweise planparallele Aufnahmeflächen (26) aufweist, wobei die Aufnahme (22) und/oder die Tragschiene (18) derart eingerichtet sind, dass das Ende (24) der Tragschiene (18) formschlüssig zwischen den Aufnahmeflächen (26) aufgenommen werden kann, insbesondere wobei das Ende (24) der Tragschiene (18) mittels mindestens eines Fixierelements (27), insbesondere einer Scherschraube, in den unterschiedlichen Positionen fixiert werden kann.

7. Vorrichtung (10) nach einem der voranstehenden Ansprüche, **dadurch gekennzeichnet, dass** die Befestigungseinrichtung (16) mindestens ein Befestigungselement (28) mit einem ersten Ende (30) und einem zweiten Ende (32) aufweist, wobei das Befestigungselement (28) mit seinem ersten Ende (30), insbesondere mittels einer zweiten Schraubverbindung (34), an der Stabwalze (12) und mit seinem zweiten Ende (32), insbesondere mittels einer dritten Schraubverbindung (36), an der Aufnahme (22) befestigbar oder befestigt ist.

8. Vorrichtung (10) nach Anspruch 7, **dadurch gekennzeichnet, dass** das Befestigungselement (28) an seinem ersten Ende (30) eine Aussparung (38) aufweist, wobei die Aussparung (38) größer ist, als ein Durchmesser einer Welle der Stabwalze (12).

9. Vorrichtung (10) nach Anspruch 7 oder 8, **dadurch gekennzeichnet, dass** das Befestigungselement (28) und/oder die Aufnahme (22) derart eingerichtet sind, dass die Aufnahme (22) in mindestens zwei unterschiedlichen Positionen an dem zweiten Ende (32) des Befestigungselements (28) fixiert werden kann, wobei in den unterschiedlichen Positionen jeweils ein Abstand und/oder ein Winkel (39) zwischen der Abstreiferleiste (14) und der Stabwalze (12) unterschiedlich ist.

10. Vorrichtung (10) nach einem der voranstehenden Ansprüche, **dadurch gekennzeichnet, dass** die Abstreiferleiste (14) zumindest teilweise aus Metall, Gummi, insbesondere Hartgummi, und/oder PVC ausgebildet ist.

11. Vorrichtung (10) nach einem der voranstehenden Ansprüche, **dadurch gekennzeichnet, dass** die Tragschiene (18) und/oder die Befestigungseinrichtung (16) aus Metall, insbesondere Stahl, ausgebildet ist.

12. Bodenbearbeitungsmaschine (40) umfassend eine Stabwalze (12) mit mehreren stabförmigen Elementen (44) und mit einer Vorrichtung (10) nach einem der voranstehenden Ansprüche.

13. Bodenbearbeitungsmaschine (40) nach Anspruch 12, **dadurch gekennzeichnet, dass** die Stabwalze (12) mindestens eine Zahnleiste (42) aufweist, wobei die Zahnleiste (42) an einem der stabförmigen Elemente (44), insbesondere in einem Winkel von 90°, befestigt ist.

14. Bodenbearbeitungsmaschine (40) nach Anspruch 13, **dadurch gekennzeichnet, dass** die Zahnleiste (42) mehrere Zähne (43) aufweist, wobei zwischen zwei benachbarten Zähnen (43) jeweils ein Schlitz (45) angeordnet ist.

15. Bodenbearbeitungsmaschine (40) nach einem der Ansprüche 12 oder 14, **dadurch gekennzeichnet, dass** die Bodenbearbeitungsmaschine (40) mindestens einen Grubberzinken (46) aufweist, wobei der Grubberzinken (46) in einem einstellbaren Abstand zur Stabwalze (12) angeordnet ist.

16. Bodenbearbeitungsmaschine (40) nach einem der Ansprüche 12 bis 15, **dadurch gekennzeichnet, dass** der Grubberzinken (46) an der Tragschiene (18), an einer weiteren Tragschiene und/oder an der Befestigungseinrichtung (16) befestigt ist.

17. Bodenbearbeitungsmaschine (40) nach Anspruch 12, **dadurch gekennzeichnet, dass** die Vorrichtung (10) eine Fixierwelle (48) umfasst, die an der Vorrichtung (10) und außerhalb der Stabwalze (12) und beabstandet zu der Stabwalze (12) angeordnet ist, wobei auf der Fixierwelle (48) mindestens eine Rolle (50) derart angeordnet ist, dass die Rolle (50) zumindest teilweise zwischen zwei benachbarte stabförmige Elemente (44) eintauchen kann.
